# EUROPEAN PATENT APPLICATION

(11) **EP 4 403 950 A1**
(43) Date of publication of application: **24.07.2024**
(21) Application number: 22883250.7
(22) Date of filing: 08.09.2022
(51) Int. Cl.: G01S 7/03, F21S 41/275, F21S 41/29, F21S 45/00, G01S 7/481, F21W 102/00

(54) **LAMP DEVICE**

(30) Priority: 19.10.2021 JP 2021171156
(71) Applicant: Stanley Electric Co. Ltd., Tokyo 153-8636 (JP)
(72) Inventor: MORI Kentaro, Tokyo 153-8636 (JP); KANECHIKA Masayuki, Tokyo 153-8636 (JP)
(74) Representative: Carstens, Dirk Wilhelm
(86) International application number: PCT/JP2022/033798
(87) International publication number: WO 2023/067939

(57) **Abstract**

The present invention includes a base which serves as a mounting part onto a vehicle, a light source unit, a translucent cover which covers a front surface side of the base so as to accommodate the light source unit inside and is mounted on the base to define a lamp body space, and an obstacle detection unit arranged at a horizontal side position of the light source unit on the lamp body space side of the translucent cover and configured to detect an obstacle by transmitting electromagnetic waves. The obstacle detection unit includes a housing and an obstacle detection device housed in the housing. The housing is fixed to the translucent cover and provided spaced away from the base.

## Description

### Technical Field

The present invention relates to a lamp device, and particularly to a lamp device for a vehicle, which includes an obstacle detection device built therein.

### Background Art

For driving support of automobiles and automatic driving, various sensors such as a camera, LiDAR (Light Detection and Ranging), and a millimeter wave sensor are used in addition to an acceleration sensor and a GPS sensor.

In particular, an obstacle detection device can directly detect the distance and direction to an object, and a relative speed with the object. Therefore, the obstacle detection device has the characteristic that even a short-range object can be detected at high speed and with high accuracy. Among them, the LiDAR is configured to irradiate a 1-wat-class pulse laser to an object, detect reflected light, and detect the distance from the time taken to detect the reflected light, and has a feature that laser light higher in luminous flux density than an electromagnetic wave and short in wavelength is used to make it possible to detect a position, a shape and the like with high accuracy. Elements in a near-infrared wavelength range are often used for this laser light to make it possible to achieve distance sensing and high optical resolution.

There has been disclosed in Patent Literature 1, a vehicular lamp tool which is mounted with a light source unit and a millimeter wave radar and has a resin cover appearing on the exterior of a vehicle body, and which has an opaque design part at a part of the resin cover and shields the millimeter wave radar by the design part.

Further, there has been disclosed in Patent Literature 2, an in-vehicle light device which is arranged to partition a space between a lamp unit and a radar unit and is provided with a separator which shields the transmission of radiant heat and electromagnetic waves between the lamp unit and the radar unit.

There has been disclosed in Patent Literature 3, a vehicular lamp tool in which a lamp chamber is formed between a lamp body and a front cover, a light source is provided inside the lamp chamber, a millimeter wave radar is installed outside the lamp chamber, and a shielding part covering the millimeter wave radar from the front is formed on the front cover.

### Citation List

### Patent Literatures

Patent Literature 1: Japanese Patent No. 5130192
Patent Literature 2: Japanese Patent Application Laid-Open No. 2020-51974
Patent Literature 3: Japanese Patent No. 5285405

### Summary of Invention

### Technical Problem

However, when affected by a high temperature environment outside a lamp body such as heat generated by a lamp inside the lamp body or engine heat, the detection function of an obstacle detection device built in the lamp body is deteriorated. A main reason for this is that the junction temperature of a semiconductor device used inside the obstacle detection device becomes too high and its function is deteriorated.

In particular, in the LiDAR, since the power of transmitted electromagnetic waves (laser light) is greater than that in millimeter wave radar, heat generation associated with this is large, and the detection function is significantly degraded. Further, an obstacle detection device which detects the lateral direction of a vehicle is also easily affected by radiant heat of the vehicle itself such as engine heat.

Since the engine continues to function even when the lamp in the lamp body is not lit, the radiant heat from the engine is constantly applied to the obstacle detection device. Therefore, it has been desired to suppress the effect of the radiant heat from the engine.

To solve this problem, it is conceivable to arrange a LiDAR device such that the effect of heat from the light source of the lamp body or the effect of the radiant heat such as the engine heat is avoided by, for example, attaching the LiDAR device to other than the lamp tool and performing obstacle detection as a separate structure. However, although this solves the problem of degrading the detection function due to the heat, a structural part other than the lamp body to house the obstacle detection device is required, so that the problem of increasing the size arises.

The present invention has been made in view of the above points, and it is an object of the present invention to provide a lamp device capable of effectively suppressing the effect of radiant heat of a vehicle itself such as engine heat and miniaturization by housing an obstacle detection device in a lamp body.

### Solution to Problem

There is provided a lamp device according to one embodiment of the present invention which includes:
a base which serves as a mounting part onto a vehicle;
a light source unit;
a translucent cover which covers a front surface side of the base so as to accommodate the light source unit inside and is mounted on the base to define a lamp body space; and
an obstacle detection unit arranged at a horizontal side position of the light source unit on the lamp body space side of the translucent cover and configured to detect an obstacle by transmitting electromagnetic waves, and
in which the obstacle detection unit includes a housing and an obstacle detection device housed in the housing, and
the housing is fixed to the translucent cover and provided spaced away from the base.

### Brief Description of Drawings

FIG. 1 is a view schematically illustrating an example of an internal structure of a lamp device 10 according to a first embodiment of the present invention;
FIG. 2 is a cross-sectional view schematically illustrating the example of the internal structure of the lamp device 10;
FIG. 3 is a cross-sectional view illustrating radiant heat RH from a heat source 90 of a vehicle on which the lamp device 10 is mounted;
FIG. 4 is a cross-sectional view schematically illustrating a structure of a lamp device 10 according to a second embodiment of the present invention;
FIG. 5 is a cross-sectional view schematically illustrating a structure of a lamp device 10 according to a third embodiment of the present invention; and
FIG. 6 is a cross-sectional view schematically illustrating a structure of a lamp device 10 according to a fourth embodiment of the present invention.

### Description of Embodiments

Although preferred embodiments of the present invention will hereinafter be described, they may be modified as appropriate or applied in combination. Also, in the following description and accompanying drawings, substantially the same or equivalent parts will be described with the same reference numerals given thereto.

Note that although an automobile will be described below as an example of a vehicle, the present invention is not limited to this. That is, in the present specification, the vehicle means a conveyance (Vehicle) including, for example, a ship, an aircraft, etc., and manned and unmanned means of transportation.

### [First Embodiment]

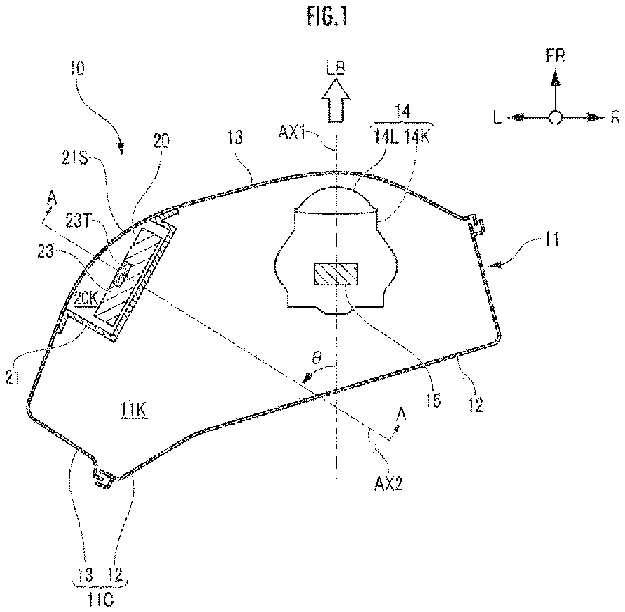

FIG. 1 is a view schematically illustrating an example of an internal structure of a lamp device 10 according to a first embodiment of the present invention, The lamp device 10 is mounted on a vehicle such as an automobile. The lamp device 10 is, for example, a headlight, but can also be applied to a lamp device having the purpose and function of emitting light toward the outside such as a taillight and a backlight.

More specifically, FIG. 1 schematically illustrates a cross section of the lamp device 10 (left headlight) in a state of being mounted on the left front of the vehicle when viewed from its upper surface, i.e., in a horizontal plane (or a plane parallel to the road surface).

Note, in the present specification, the terms "horizontal and vertical planes (or directions) refer to the horizontal and vertical planes (or directions) when the lamp device 10 is mounted onto the vehicle, and correspond to the horizontal and vertical planes (or directions) of the vehicle.

The lamp device 10 has a lamp section 11 and an obstacle detection unit 20 which is an obstacle detection part. In the lamp device 10, a lamp housing (casing) 11C is constituted of a base 12 and a translucent cover (front cover) 13 mounted to the front surface side or front side of the base 12.

More, specifically, a lamp body space 11K which is an internal space is defined by mounting the translucent cover 13 to the base 12. In the present embodiment, the lamp body space 11K is configured as a sealed space.

The translucent cover 13 is mounted to the base 12 so as to cover the front surface side of the base 12. The lamp device 10 is mounted on a vehicle body (not illustrated) by mounting the base 12 to the vehicle body side.

The base 12 is formed of plastic (resin). For example, a headlight is formed of PP (polypropylene), and a tail lamp is formed of ASA (acrylonitrile-styrene-acrylic rubber), but they are not limited to these. Further, a metal and the like may be used partially.

Further, the translucent cover 13 is formed of, for example, a translucent resin such as polycarbonate (PC). Note that the translucent cover 13 may have a translucent property which allows light other than white, such as red or yellow to pass therethrough.

A light source unit 14 is provided in the lamp body space 11K of the lamp housing 11C. The light source unit 14 includes a light source 15 such as an LED (Light Emitting Diode) and an optical system 14L such as a lens or reflector for distributing and irradiating light from the light source 15 along an optical axis AX1. The light source 15 is provided within a light source housing 14K.

The light source unit 14 is provided so as to emit low beam (passing beam) and high beam (running beam) irradiation light LB in a forward (FR in the figure) direction.

Further, an extension or the like may be provided within the lamp housing 11C. The extension is a design component provided to reflect light, guide light, or make internal structures or the like difficult to see from the outside.

The obstacle detection unit 20 is fixed to the translucent cover 13. The obstacle detection unit 20 is provided so as to be located on a rear surface of the translucent cover 13 and on the side of the light source unit 14 in the horizontal direction. Further, the obstacle detection unit 20 is provided at a position spaced apart from the base 12. More specifically, the obstacle detection unit 20 is provided at a position where a side wall and a bottom portion of the obstacle detection unit 20 do not contact the base 12, i.e., at a position where the base 12 does not contact the vehicle body when mounted on the vehicle body.

The obstacle detection unit 20 has a housing 21 and an obstacle detection device 23 housed in the housing 21. The obstacle detection device 23 transmits electromagnetic waves such as millimeter waves or laser light and measures the distance to an object and the shape thereof by observing the electromagnetic waves reflected by the object.

In the obstacle detection unit 20, a space (obstacle detection unit space) 20K is defined which is separated from the lamp body space 11K of the lamp housing 11C by the housing 21 and separated away from the lamp body space 11K.

More specifically, the housing 21 of the obstacle detection unit 20 is fixed to the rear surface of the translucent cover 13, i.e., within the lamp body space 11K. Then, a portion 21S of the translucent cover 13 facing the obstacle detection unit 20 and the housing 21 define the obstacle detection unit space 20K. As a method of fixing the housing 21 to the translucent cover 13, existing methods such as screwing, an adhesive, and welding of resins together can be selected.

Incidentally, in order to absorb the electromagnetic waves transmitted by the obstacle detection device 23, the housing 21 of the obstacle detection unit 20 may use, for example, a resin containing an electromagnetic wave absorbing material such as carbon if the electromagnetic waves are in a millimeter wave band, or a member in which the coating of the front or back surface of the housing 21 with an electromagnetic wave absorbing material or the sticking of an electromagnetic wave absorber thereon, and the like are performed.

Further, when the electromagnetic wave is in a near infrared region, infrared absorbing substances such as LaB6 (lanthanum hexaboride), CWO (cesium-doped tungsten oxide), ITO (tin-doped indium oxide), and ATO (antimony-doped tin oxide) can be used as with carbon by being contained in the resin or by coating on the surface or back surface of the housing, etc.

Therefore, it is possible to absorb among the electromagnetic waves transmitted by the obstacle detection device 23, the components which become noise by being reflected by the translucent cover 13 and then multiple-reflected within the lamp body space 11K or the obstacle detection unit space 20K and to improve detection accuracy.

Then, the obstacle detection unit 20 has the obstacle detection device 23 which is a distance detecting sensor provided in the obstacle detection unit space 20K. The obstacle detection device 23 is, for example, a detection and ranging device using electromagnetic waves, such as LiDAR and a radar device.

Further, a part of the translucent cover 13 of the lamp device 10 which faces the light source unit 14 transmits visible light, while a part thereof in which the obstacle detection unit 20 faces may be configured to transmit electromagnetic waves sent out by the obstacle detection device 23 and to be non-translucent or semi-translucent to visible light. In this case, the obstacle detection unit 20 is not visible from the outside, which is preferable in terms of design.

Such a structure can be made by, for example, making the translucent cover 13 from a resin material which transmits visible light, and then fabricating the part where the obstacle detection unit 20 faces by two-color molding using a non-translucent material. Further, instead of the two-color molding, a film made of a non-translucent material may be attached to the corresponding part.

The obstacle detection device 23 has a transmitting-receiving unit 23T and is arranged such that a central axis AX2 of an electromagnetic wave by the transmitting-receiving unit 23T is tilted in an outward direction (i.e., left direction in the case of the left headlight) by an angle θ (θ>0) with respect to the optical axis AX1 of the light source unit 14 (or relative to the travelling direction FR of the vehicle). Note that the transmitting-receiving unit 23T may be arranged so that the central axis AX2 faces the travelling direction FR (θ = 0).

Note that the range of detection by the obstacle detection device 23 may have an extension of a predetermined angle from the central axis AX2 of the electromagnetic wave. It is preferable that the location where the housing 21 is fixed to the translucent cover 13 is set outside this angular range. Therefore, it is possible to suppress degradation in detection accuracy of the obstacle detection device 23.

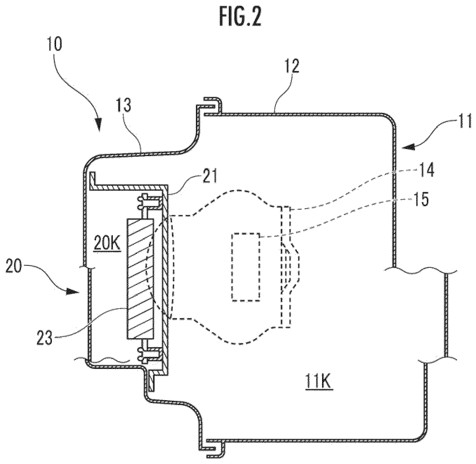

FIG. 2 is a cross-sectional view schematically illustrating the example of the internal structure of the lamp device 10. Note that the figure illustrates a cross section (direction indicated by A in FIG. 1) in a vertical plane including the central axis AX2 which is a central axis of a transmitting-receiving antenna for electromagnetic waves by the transmitting-receiving unit 23T or a scanning central axis of the laser light.

As illustrated in FIGS. 1 and 2, the obstacle detection device 23 is arranged to be located on the outer side of the light source unit 14 in the horizontal plane (i.e., on the side in the horizontal direction). FIG. 2 illustrates that the light source unit 14 (indicated by a broken line) is arranged behind the obstacle detection device 23.

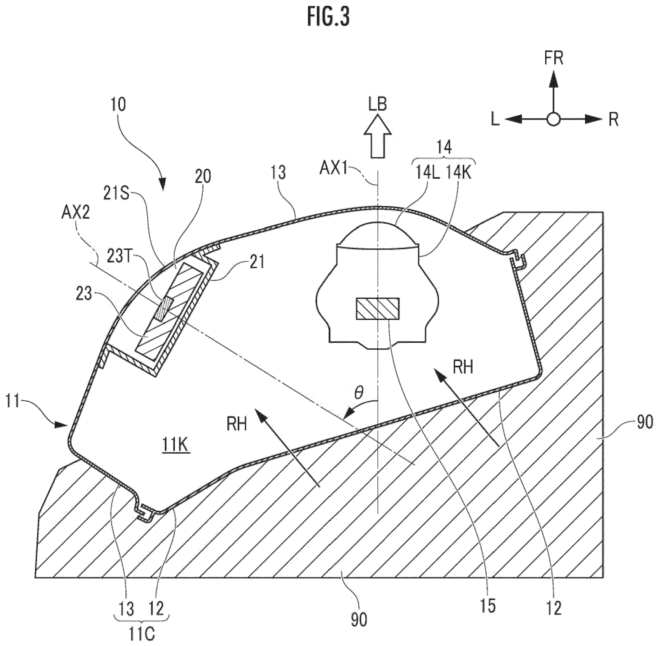

FIG. 3 is a view similar to FIG. 1, but illustrates radiant heat RH from the heat source 90 such as a vehicle engine, which is mounted with the lamp device 10. According to the lamp device 10 of the present embodiment, the lamp device 10 has the lamp body space 11K which receives the radiant heat from the heat source 90 such as the engine.

The obstacle detection unit 20 is separated by the lamp body space 11K of the lamp section 11, so that the effect of the radiant heat RH from the heat source 90 of the vehicle itself in a high temperature environment is avoided. That is, since the obstacle detection unit 20 does not come into direct contact with the heat source 90 of the vehicle itself, it is possible to reduce a rise in the temperature of the obstacle detection unit 20.

Therefore, it is possible to provide a lamp device having a highly accurate obstacle detection function, which suppresses the effect of heat.

### [Second Embodiment]

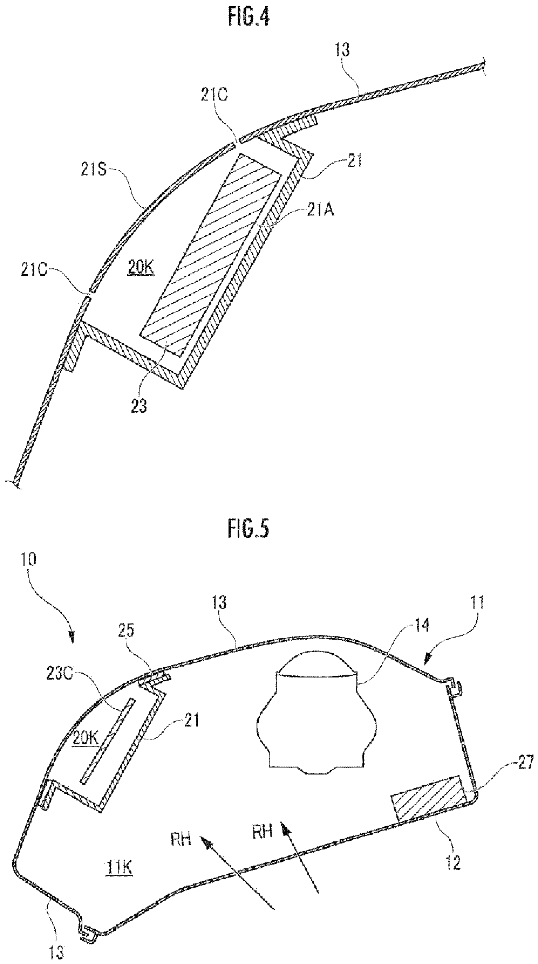

FIG. 4 is a partially enlarged sectional view schematically illustrating a structure of a lamp device 10 according to a second embodiment of the present invention. More specifically, FIG. 4 is a view illustrating a structure of an obstacle detection unit 20 in an enlarged form.

A part 21S of a translucent cover 13 facing a housing 21 of the obstacle detection unit 20 has communication portions 21C each being a hole portion through which the outside and an obstacle detection unit space 20K communicate. That is, the obstacle detection unit 20 is not sealed, and the obstacle detection unit space 20K which is its internal space serves as a non-sealed space. Note that it is preferable that a plurality of communication portions 21C be provided.

Further, the obstacle detection device 23 is mounted to a translucent cover 13 so as to have a gap between the obstacle detection device 23 and the surface of the housing 21 of the obstacle detection unit 20 (refer to FIG. 2).

With this configuration, the obstacle detection device 23 is configured such that an air circulation path 21A is formed between the back surface of the obstacle detection device 23 and the housing 21 of the obstacle detection unit 20, and heat dissipation and cooling of a sensor operated within the obstacle detection device 23 are performed so that the effect of heat from a lamp section 11 can be reduced.

Therefore, the obstacle detection device 23 is separated by a lamp body space 11K of the lamp section 11 and is excellent even in cooling effect, and is capable of reducing the effect of radiant heat RH from a heat source 90 of a vehicle being in a high-temperature environment and preventing a rise in the temperature of the obstacle detection unit 20.

### [Third Embodiment]

FIG. 5 is a cross-sectional view schematically illustrating a structure of a lamp device 10 according to a third embodiment of the present invention.

In the present embodiment, an obstacle detection unit 20 has a sealed structure and has a space separated from a lamp body space 11K. Specifically, a housing 21 of the obstacle detection unit 20 is mounted to a translucent cover 13 of a lamp section 11 through a seal portion 25, and thereby an internal space (obstacle detection unit space 20K) of the obstacle detection unit 20 is configured as a sealed space. Further, the obstacle detection unit space 20K is formed as an isolated space from which heat from the lamp body space 11K is cut off.

Further, in the present embodiment, a transmitting-receiving circuit board 23C which is a sensor circuit serving as an obstacle detection device is provided inside the obstacle detection unit 20. More specifically, the transmitting-receiving circuit board 23C is a circuit board on which a transmitting wave generator (generator), e.g., a transmitting-receiving circuit such as a monolithic microwave integrated circuit (MMIC) which transmits and receives electromagnetic waves such as millimeter waves and laser light, and an interface circuit are mounted. Therefore, the transmitting-receiving circuit board 23C is constructed on a circuit board excellent in heat dissipation. The obstacle detection device circuit board is provided so as to be exposed inside the obstacle detection unit space 20K of the obstacle detection unit 20.

The transmitting-receiving circuit board 23C is connected to, for example, a detection device control module 27 arranged within the lamp body space 11K of the lamp section 11. The detection device control module 27 is provided within a light control module (LCM), for example.

The detection device control module 27 functions as a signal processing and control circuit which performs signal processing of a detection signal from the transmitting-receiving circuit board 23C and control of the transmitting-receiving circuit board 23C. That is, the transmitting-receiving circuit board 23C and the detection device control module 27 constitute the obstacle detection unit 20. The detection device control module 27 is configured as a processor (for example, a CPU) and is a main heat generation body for the obstacle detection unit 20.

Therefore, the signal processing and control circuit for the detection signal of the transmitting-receiving circuit board 23C is provided outside the obstacle detection unit space 20K as the detection device control module (processor) 27. Thus, since the transmitting-receiving circuit board 23C is configured on the circuit board with good heat dissipation, and the detection device control module 27 which is the heat generation body is provided separately from the transmitting-receiving circuit board 23C, the heat generated within the obstacle detection unit space 20K is low. Further, since the heat generated by the transmitting-receiving circuit board 23C is radiated through the translucent cover 13, and a rise in the temperature in the obstacle detection unit space 20K is suppressed, deterioration in the characteristics of the sensor circuit due to the temperature rise is suppressed.

The transmitting-receiving circuit board 23C of the obstacle detection device 23 which functions as the obstacle detection device sensor 23 is separated by the lamp body space 11K of the lamp section 11 and excellent even in cooling effect, and is reduced in the effect of radiant heat RH from a heat source 90 of a vehicle.

Therefore, it is possible to provide a lamp device having a highly accurate obstacle detection device function, in which a rise in the temperature of the obstacle detection device sensor board circuit is prevented and the effect of heat is suppressed.

### [Fourth Embodiment]

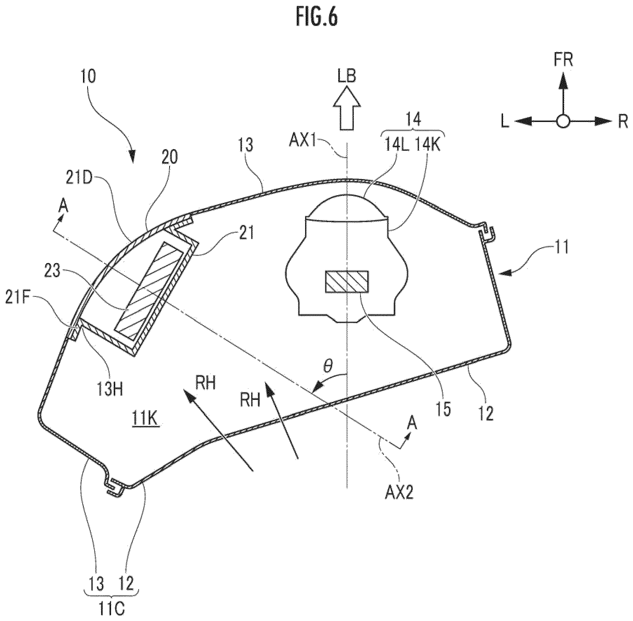

FIG. 6 is a cross-sectional view schematically illustrating a structure of a lamp device 10 according to a fourth embodiment of the present invention.

In the present embodiment, an obstacle detection unit 20 is fitted into and fixed to a through hole 13H provided in a part of a translucent cover 13. More specifically, a flange portion 21F formed at a peripheral edge of a housing 21 of the obstacle detection unit 20 is joined to a peripheral edge of the through hole 13H of the translucent cover 13, and the housing 21 is fixed to the translucent cover 13. Then, an obstacle detection device 23 is fixed inside the housing 21. Further, a front opening of the housing 21 of the obstacle detection unit 20 is covered with a non-translucent cover 21D.

Note that the non-translucent cover 21D is preferably heat shielding. When exemplified, resins such as polycarbonate, acrylic, and PBT can be used. Further, it is possible to perform heat shielding and achieve weight reduction by using a foamed resin.

With this configuration, the obstacle detection device 23 is separated by a lamp body space 11K of a lamp section 11, thereby making it possible to reduce the effect of radiant heat RH from a vehicle heat source 90 which is in a high-temperature environment and prevent a rise in the temperature of the obstacle detection unit 20.

Further, the non-translucent cover 21D can be made of, for example, a material through which electromagnetic waves transmitted by the obstacle detection device 23 can pass more easily than the translucent cover 13, thereby making it possible to improve the accuracy of obstacle detection. Further, it is possible to perform freely changing of the outer appearance color of the non-translucent cover 21D to one matched the color of a vehicle body, and the like, for example. This is preferable from a design standpoint. Furthermore, the non-translucent cover 21D and the translucent cover 13 are set so as to form a common curved surface, that is, the surface of the non-translucent cover 21D and the surface of the translucent cover 13 are set not to have a step difference therebetween, thereby making it possible to create such an outer appearance that the non-translucent cover 21D is integral with the translucent cover 13, which is preferable in terms of design.

According to the present invention as described above in detail, it is possible to provide a lamp device capable of effectively suppressing the effect of radiant heat of a vehicle itself such as engine heat and having a highly accurate obstacle detection device function.

### Description of Reference Numerals

10: lamp device
11: lamp section
11C: lamp housing
11K: lamp body space
12: base
13: translucent cover
14: light source unit
14K: light source housing
14L: optical system
15: light source
20: obstacle detection unit
20K: obstacle detection unit space
21: housing of obstacle detection unit
21A: air circulation path
21C: communication portion
23: obstacle detection device
23C: transmitting-receiving circuit board
25: seal portion
26: heat insulation member
27: detection device control module
90: heat source

## Claims

1. A lamp device comprising:
a base which serves as a mounting part onto a vehicle;
a light source unit;
a translucent cover which covers a front surface side of the base so as to accommodate the light source unit inside and is mounted on the base to define a lamp body space; and
an obstacle detection unit arranged at a horizontal side position of the light source unit on the lamp body space side of the translucent cover and configured to detect an obstacle by transmitting electromagnetic waves,
wherein the obstacle detection unit includes a housing and an obstacle detection device housed in the housing, and
wherein the housing is fixed to the translucent cover and provided spaced away from the base.

2. The lamp device according to claim 1, wherein the housing of the obstacle detection unit includes an electromagnetic wave absorbing material which absorbs the electromagnetic wave transmitted by the obstacle detection device.

3. The lamp device according to claim 1 or 2, wherein the translucent cover includes a portion facing the light source unit which allows visible light to pass through, and a portion in which the obstacle detection unit faces, which allows electromagnetic waves transmitted from the obstacle detection device to pass through without allowing the visible light to pass through.

4. The lamp device according to any one of claims 1 to 3, wherein the obstacle detection device has a transmitting-receiving unit, and includes a central axis of the electromagnetic wave from the transmitting-receiving unit which is inclined with respect to an optical axis direction of the light source unit.

5. The lamp device according to any one of claims 1 to 4, wherein the translucent cover includes a portion in which the obstacle detection unit faces, which has a hole communicating between an outside and the obstacle detection unit.

6. The lamp device according to any one of claims 1 to 4, wherein the translucent cover is provided with a through hole, and the obstacle detection unit is fitted into the through hole.

7. The lamp device according to any one of claims 1 to 6, wherein the obstacle detection device is configured as a transmitting-receiving circuit board, and
wherein the lamp device includes a processor connected to the transmitting-receiving circuit board and arranged in the lamp body space to perform signal processing of a detection signal from the transmitting-receiving circuit board and control of the transmitting-receiving circuit board.

8. The lamp device according to any one of claims 1 to 7, wherein the obstacle detection device is either LiDAR or a radar device.
